# FASCICULE DE BREVET EUROPEEN

(11) **EP 3 592 577 B1**
(45) Date de publication et mention de la délivrance du brevet: **14.07.2021**
(21) Numéro de dépôt: 18709315.8
(22) Date de dépôt: 01.03.2018
(51) Int. Cl.: B60C 13/00

(54) **PNEUMATIQUE POURVU D'UNE TEXTURE SUR UN FLANC**
REIFEN MIT EINER STRUKTUR AN EINER SEITENWAND
TYRE PROVIDED WITH A TEXTURE ON A SIDEWALL

(30) Priorité: 06.03.2017 FR 1751786
(43) Date de publication de la demande: 15.01.2020
(73) Titulaire: COMPAGNIE GENERALE DES ETABLISSEMENTS MICHELIN, 63000 Clermont-Ferrand (FR)
(72) Inventeur: DEBORDEAUX, Héloïse, 63040 Clermont-Ferrand Cedex 09 (FR); MUHLHOFF, Olivier, 63040 Clermont-Ferrand Cedex 09 (FR); NOMURA, Masayoshi, 63040 Clermont-Ferrand Cedex 09 (FR)
(74) Mandataire: Millanvois, Patrick Jacques Jean
(86) Numéro de dépôt international: PCT/EP2018/055005
(87) Numéro de publication internationale: WO 2018/162308

(56) Documents cités:
- WO-A1-2016/067854
- FR-A1- 3 022 851
- JP-A- 2007 320 469
- JP-A- 2011 116 306
- JP-A- 2014 136 487
- US-A1- 2013 032 265

## Description

La présente invention concerne les domaines des pneumatiques pour véhicules.

Plus particulièrement, l'invention concerne des pneumatiques présentant au moins une texture particulière sur un flanc pour procurer un aspect amélioré.

De manière connue, la carcasse interne d'un pneumatique est composée d'au moins une nappe carcasse de fils enrobés de caoutchouc. Lors d'une étape de fabrication du pneumatique, cette nappe carcasse est coupée puis assemblée sur un tambour. Or, il est possible qu'au cours de sa mise en place, la fin de la nappe carcasse ne coïncide pas exactement avec le début de cette nappe sur le tambour, de sorte qu'il existe un surplus de nappe dans l'assemblage.

Cette superposition crée localement une surépaisseur sur l'ébauche crue du pneumatique. Une fois cette ébauche crue vulcanisée et le pneumatique en résultant gonflé, cette surépaisseur apparaît en creux au niveau du flanc du pneumatique.

Or, un tel creux est particulièrement visible sur le pneumatique, notamment sous certaines conditions d'éclairage. Ceci peut constituer un motif de non achat par un consommateur alors même que ce défaut n'impacte nullement le comportement du pneumatique et n'est donc pas préjudiciable à la sécurité.

Afin de masquer ce défaut sur le flanc du pneumatique, il est proposé, par la demande de brevet US 2008/0066846, de former un motif moiré sur le flanc du pneumatique, notamment dans la zone où se trouve la déformation vallonnement/creux créée par le chevauchement des extrémités de ou des nappes carcasses. Les motifs moirés décrits sont obtenus par superposition de groupes de courbes non identiques. Ces motifs moirés visent à créer des interférences lorsque la lumière est réfléchie par le flanc du pneumatique. Ainsi, les différences de réflexion de la lumière, qui existaient auparavant entre la zone de vallonnement/creux et le reste de la surface du flanc, ne sont plus visibles à l'œil nu.

Un des problèmes de cette solution concerne le coût lié à l'obtention de ces motifs moirés de forme complexe. Par ailleurs, de tels motifs n'apportent pas entière satisfaction concernant le masquage des défauts de surface sur le flanc du pneumatique. Les documents JP 2014136487 A, JP 2011116306 A, WO 2016/067854 A1 et US 2013/032265 A1 proposent de masquer les défauts de déformations des flancs par des motifs ayant des éléments de texture à orientations différentes.

La présente invention vise à remédier à ces inconvénients.

Plus particulièrement, la présente invention vise à améliorer encore davantage le masquage des défauts de déformations des flancs des pneumatiques tout en procurant un aspect haut de gamme à ces pneumatiques.

L'invention concerne un pneumatique en matériau caoutchoutique suivant la revendication 1, comprenant une bande de roulement et deux flancs délimitant ladite bande de roulement, au moins un des flancs comprenant au moins une texture faisant contraste par rapport au reste dudit flanc.

Selon une caractéristique générale de ladite texture, celle-ci est divisée en une pluralité de motifs adjacents et de forme extérieure identique.

Selon une autre caractéristique générale, tout ou partie des motifs comprennent une pluralité d'éléments de texture agencés de sorte à former dans le motif une pluralité de rangées s'étendant selon une même direction d'extension. Pour un motif déterminé de ladite texture, les rangées d'éléments de texture de chaque motif adjacent audit motif déterminé présentent une direction d'extension différente de la direction d'extension des rangées des éléments de texture dudit motif déterminé.

Selon une autre caractéristique générale, la luminosité dudit reste dudit flanc non texturé est supérieure d'au moins 5 unités aux luminosités des motifs de ladite texture.

Par « pneumatique », on entend tous les types de bandages élastiques soumis à une pression interne ou non.

On entend par « matériau caoutchoutique », un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement du pneumatique et un bourrelet de ce pneumatique, débutant à partir des extrémités des découpures de la bande de roulement et se prolongeant jusqu'au bourrelet.

On entend par « texture » sur un flanc, une partie de flanc qui présente des caractéristiques d'état de surface différentes du reste du flanc et qui est formée au moins en partie par répétition d'un motif de forme extérieure identique.

Par « motif », on entend une zone de la texture comprenant un agencement organisé d'éléments de texture selon une même orientation, i.e. la direction d'extension.

Par « éléments de texture », on entend des éléments en protubérance ou en creux par rapport au flanc du pneumatique.

Par « motifs adjacents », on entend des motifs contigus qui comprennent au moins un bord commun. Par exemple, tout ou partie des motifs de ladite texture peuvent être délimités chacun par au moins deux bords intérieur et extérieur et par au moins deux bords latéraux. Dans ce cas, pour un motif déterminé de ladite texture, au moins un des bords de chaque motif adjacent audit motif déterminé est commun avec un des bords dudit motif déterminé.

Par « bords intérieur et extérieur », on entend les bords du motif en considérant une direction radiale, i.e. une direction perpendiculaire à l'axe de rotation du pneumatique. Par « bords latéraux », on entend les bords du motif en considérant une direction circonférentielle, i.e. une direction tangente à un cercle dont le centre est sur l'axe de rotation du pneumatique.

Grâce à l'invention, on obtient pour un motif déterminé de la texture, des motifs adjacents audit motif qui présentent des luminosités différentes compte tenu de l'agencement des éléments de texture des motifs et de l'orientation particulière des motifs les uns par rapport aux autres. L'écart de luminosité perçu, par un observateur, entre motifs adjacents varie avec les conditions d'éclairage dudit motif, ce qui contribue à masquer les défauts de déformations des flancs du pneumatique.

Par « luminosité » ou « luminance », on entend le paramètre qui caractérise une surface à réfléchir plus ou moins la lumière. La luminosité est exprimée selon une échelle allant de 0 à 100 selon le modèle colorimétrique L*a*b* établi par la CIE (Commission Internationale de l'Eclairage) en 1976. La valeur 100 représente le blanc ou la réflexion totale ; la valeur 0, le noir ou l'absorption totale.

Les déformations locales du flanc générées lors de la fabrication du pneumatique sont masquées de manière particulièrement efficace par la texture qui confère en outre un aspect haut de gamme au pneumatique. En outre, les coûts liés à la fabrication de cette texture sont limités dans la mesure où les éléments de texture des motifs sont agencés sous forme de rangées.

Par ailleurs, avec l'écart de luminosité prévu entre le reste du flanc non texturé et les motifs de la texture, cela crée un contraste entre la texture et les parties du flanc dépourvues de texture qui rend davantage visible cette texture.

De préférence, tout ou partie des éléments de texture des motifs s'étendent linéairement selon la direction d'extension des rangées dudit motif. Ceci permet de limiter encore les coûts liés à la fabrication de la texture. Dans ce but, tout ou partie des éléments de texture de chaque motif peuvent être la répétition d'un même élément de base.

Afin de limiter encore les coûts de fabrication de la texture, tout ou partie des motifs de ladite texture peuvent être identiques et orientés de sorte à obtenir l'agencement organisé des rangées des éléments de texture entre un motif déterminé et le motif adjacent tel qu'indiqué précédemment.

De sorte à réduire les coûts de fabrication de la texture, celle-ci peut être réalisée par une opération de moletage effectuée lors du tournage de la pièce de moule. Une autre possibilité est de réaliser les rangées d'éléments de texture par usinage au laser.

Dans un mode de réalisation, la valeur de l'angle formé entre la direction d'extension des rangées d'éléments de texture dudit motif déterminé et entre la direction d'extension des rangées d'éléments de texture de chaque motif adjacent audit motif déterminé est supérieure ou égale à 45° en valeur absolue, par exemple supérieure à 60° en valeur absolue, et de préférence égale à 90° en valeur absolue. La valeur dudit angle peut être inférieure ou égale à 135° en valeur absolue.

Les motifs de ladite texture peuvent avoir une forme extérieure polygonale, notamment carrée et/ou rectangulaire et/ou hexagonale et/ou de parallélogramme.

Avantageusement, la surface de tout ou partie des motifs de ladite texture est comprise entre 5 mm² et 3 cm², et de préférence comprise entre 10 mm² et 50 mm².

Tout ou partie des éléments de texture des motifs peuvent être en creux par rapport à la surface dudit flanc. Alternativement ou en combinaison, tout ou partie des éléments de texture des motifs peuvent être en saillie par rapport audit flanc. Tout ou partie des éléments de texture en creux et/ou en protubérance peuvent présenter des formes et des distances variables en eux. Dans un mode de réalisation particulier, les éléments de texture peuvent être disposés dans un logement en creux formé sur ladite surface du flanc.

De préférence, les éléments de texture des motifs ont des dimensions identiques, en hauteur ou profondeur et en largeur. Les éléments de texture des motifs de ladite texture peuvent présenter une largeur moyenne comprise entre 0,02 mm et 0,35 mm, le pas entre lesdits éléments de texture d'un même motif pouvant être compris entre 0.05 mm et 0.5 mm.

De préférence, ladite texture peut former globalement une surface annulaire sur ledit flanc du pneumatique.

Dans un mode de réalisation, le pneumatique comprend au moins un marquage qui est entouré tout ou partie par la texture.

La présente invention sera mieux comprise à la lecture de la description détaillée de modes de réalisation pris à titre d'exemples nullement limitatifs et illustrés par les dessins annexés sur lesquels :
- la figure 1 est une vue schématique en perspective d'une partie d'un pneumatique qui comprend une texture particulière formée sur un flanc du pneumatique selon un exemple de réalisation de l'invention,
- la figure 2 représente une partie de la texture du flanc du pneumatique de la figure 1,
- les figures 3 à 5 représentent une partie de la texture du flanc d'un pneumatique selon d'autres exemples de réalisation de l'invention, et
- la figure 6 représente une partie de la texture du flanc du pneumatique de la figure 2 pourvu d'un marquage.

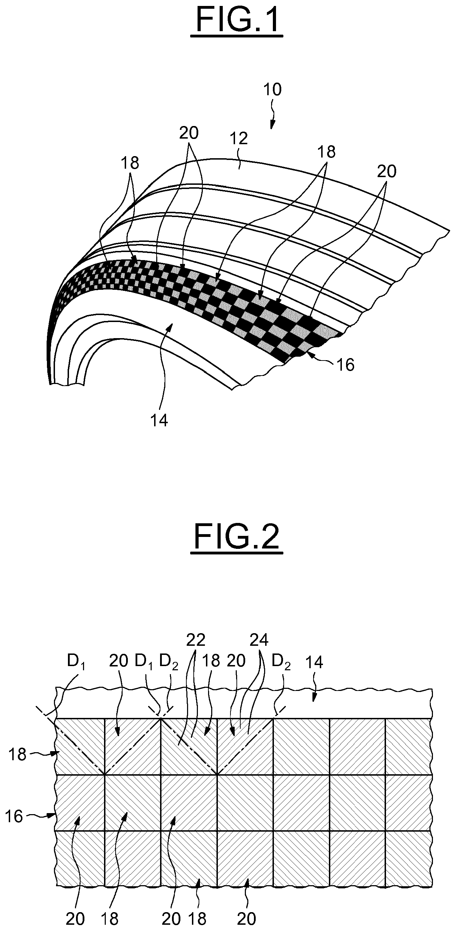

Sur la figure 1 est représenté schématiquement un pneumatique 10 comprenant une bande de roulement 12 et des flancs 14 latéraux entourant de part et d'autre la bande de roulement, un seul étant visible sur la figure. La bande de roulement 12 comprend une surface de roulement destinée à venir en contact avec une chaussée lors du roulage.

Le flanc 14 comprend une texture 16 qui est spécialement prévue pour masquer les déformations de ce flanc liées au chevauchement de nappe carcasse du pneumatique lors de la fabrication. La texture 16 peut s'étendre sur tout ou partie du flanc 14, et en particulier sur la partie comprenant les déformations. La texture 16 peut former une surface globalement annulaire en forme d'anneau sur le flanc 14. En variante, la texture 16 peut être discontinue dans le sens circonférentiel.

La texture 16 est composée d'une pluralité de motifs 18, 20 qui sont disposés adjacents les uns aux autres sur le flanc et qui présentent une forme extérieure identique. Dans l'exemple de réalisation illustré, les motifs 18, 20 présentent une forme extérieure carrée. La texture 16 est donc divisée en motifs 18, 20 de carrés égaux. La texture 16 présente ici une forme en damier.

La texture 16 est formée par une pluralité de bandes qui s'étendent chacune dans le sens circonférentiel et qui sont disposées de manière adjacente dans le sens radial. Chaque bande est composée d'une alternance de motifs 18, 20.

Comme illustré plus visiblement à la figure 2, chaque motif 18 comprend une pluralité de stries 22 parallèles entre elles et formées en creux sur la surface du flanc 14. Les stries 22 sont ainsi agencées pour former une pluralité de rangées parallèles s'étendant dans le motif 18 considéré selon une même et unique direction d'extension D₁. Dans l'exemple de réalisation illustré, la direction d'extension D₁ forme un angle avec une direction radiale perpendiculaire à l'axe de rotation du pneumatique d'une valeur de 45° en valeur absolue. En variante, il est bien entendu possible de prévoir d'autres valeurs pour ledit angle.

De façon similaire aux motifs 18, chaque motif 20 comprend une pluralité de stries 24 parallèles entre elles et s'étendant selon une même direction d'extension D₂ qui est différente de la direction d'extension D₁. Dans l'exemple de réalisation illustré, la valeur de l'angle formé entre les directions d'extension D₁ et D₂ est égale à 90° en valeur absolue. Alternativement, il est possible de prévoir d'autres valeurs dudit angle, en restant toutefois de préférence dans une plage en valeur absolue comprise entre 45° et 90° afin d'optimiser la qualité de l'effet visuel produit par la texture 16.

Les stries 22, respectivement 24, s'étendent linéairement selon la direction d'extension D₁, respectivement D₂, dans le motif 18, respectivement 20. Les stries 22, 24 sont continues. Alternativement, les stries 22, 24 pourraient être discontinues.

Afin d'optimiser les propriétés de masquage des stries 22 et 24, le pas moyen de celles-ci est compris entre 0.05 et 0.5 mm. Le pas peut être constant ou variable. Dans ce but, la surface de chaque motif 18, 20 est comprise entre 5 mm² et 3 cm². Les stries 22, 24 ont une largeur moyenne comprise entre 0,02 mm et 0,35 mm à mi-profondeur. Les stries 22, 24 sont réparties dans le motif 18, 20 associé selon une densité au moins égale à une strie par mm², chaque strie ayant une section moyenne comprise entre 0.0005 mm² et 0.6 cm². La hauteur des stries est par exemple comprise entre 0,1 mm et 0,6 mm, préférentiellement comprise entre 0,2 mm et 0,4 mm.

Dans l'exemple de réalisation illustré, les motifs 18, 20 de la texture 16 sont identiques entre eux, seule l'orientation de ces motifs étant différente. Autrement dit, la texture 16 est composée par répétition d'un motif de base dont l'orientation varie. L'agencement des motifs 18, 20 est organisé de sorte que pour un motif 18, 20 donné, les rangées de stries 22, 24 de chaque motif adjacent à ce motif donné présentent une direction d'extension D₁, D₂ différente de la direction d'extension des rangées des éléments de texture dudit motif déterminé.

Comme indiqué précédemment, les motifs 18, 20 de la texture présentent ici une forme extérieure carrée. Sur l'exemple de réalisation illustré, en considérant une bande circonférentielle située dans une zone médiane de la texture 16, le côté latéral d'un motif 18 est commun avec le côté latéral du motif 20 qui le précède et le côté latéral opposé du motif 18 est commun avec le côté latéral du motif 20 qui le suit. De façon similaire, le côté intérieur d'un motif 18 est commun avec le côté extérieur du motif 20 qui est situé au-dessous et le côté extérieur du motif 18 est commun avec le côté intérieur du motif 20 qui est situé au-dessus.

Chaque motif 18, respectivement 20, de la texture 16 présente une luminosité dite première luminosité L^{∗}1, respectivement deuxième luminosité L^{∗}2. Le reste du flanc 14 non texturé présente une luminosité dite troisième luminosité L^{∗}3 supérieure d'au moins 5 unités, de préférence d'au moins 10 unités, aux première et deuxième luminosités L^{∗}1, L^{∗}2 des motifs. Cela crée de fait un contraste entre la texture 16 et le reste du flanc 14 non texturé qui rend davantage visible la texture. Les première et deuxième luminosités L^{∗}1 et L^{∗}2 de chaque motif 18, 20 de la texture 16 peuvent par exemple être comprise entre 5 et 15. La valeur absolue des différences des luminosités L^{∗}1 et L^{∗}2 entre deux motifs 18, 20 adjacents est inférieure ou égale à 3.

L'appareil de mesure de la luminosité approprié est un spectro-colorimètre CM 700D de la marque KONICA-MINOLTA. Cet appareil est adapté pour mesurer :
- la luminosité L^{∗}1 à L^{∗}3 des zones du flanc 14,
- une composante a* qui définit une première nuance de couleur entre le rouge et le vert,
- une composante b* qui définit une deuxième nuance de couleur entre le jaune et le bleu.

On positionne l'appareil sur la partie du flanc 14 du pneumatique que l'on veut mesurer et qui donne ensuite les valeurs des trois paramètres L*, a*, b*. Ces mesures sont effectuées avec le mode « SCI » (Mode de réflexion spéculaire incluse) paramétré à un angle de 10° et un réglage de la lumière de type D65 (réglage défini selon la Commission Internationale de l'Eclairage, CIE). Grâce à cet appareil, on quantifie la luminosité de la texture 16 du flanc qui est ensuite comparée à la luminosité des parties du flanc 14 non texturées.

La figure 2 illustre un exemple non limitatif de l'orientation des stries 22, 24 des motifs de la texture. Alternativement, il est bien entendu possible de prévoir d'autres orientations pour ces stries.

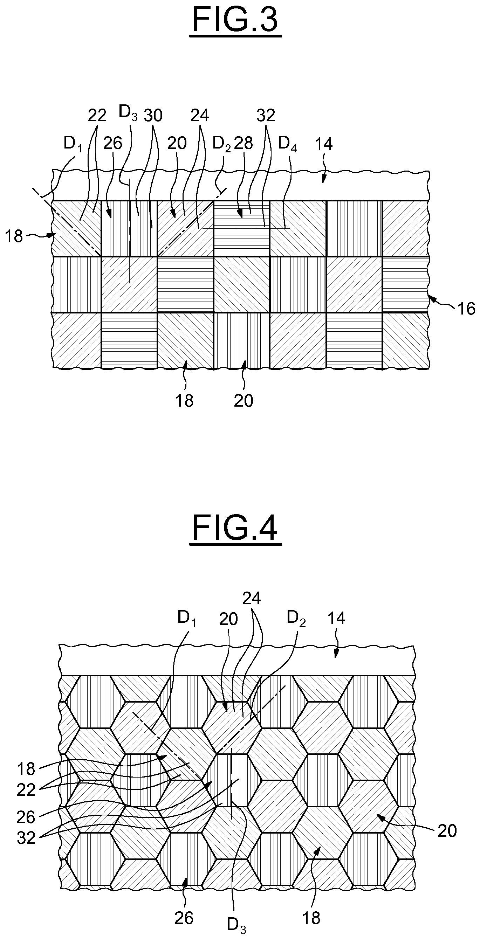

Par exemple, dans la variante de réalisation illustrée à la figure 3, sur laquelle les éléments identiques portent les mêmes références, la texture 16 est composé par la répétition du premier et du deuxième motifs 18, 20, et d'un troisième et quatrième motifs 26, 28 dont l'orientation ainsi que le pas des stries 30, 32 varient. Les stries 30, respectivement 32, sont parallèles entre elles et agencées pour former une pluralité de rangées s'étendant dans le motif considéré selon une direction d'extension D₃, respectivement D₄, d'extension différente des directions d'extension D₁ et D₂. La valeur de l'angle formé entre les directions d'extension D₁ et D₂ est ici égale à 90°, la valeur de l'angle formé entre les directions d'extension D₃ et D₄ est ici égale à 90°, et la valeur de l'angle formé entre les directions d'extension D₁, ou D₂, et D₃ ou D₄, est égale à 45°.

En variante, il est possible de prévoir des valeurs d'angle différentes en conservant toutefois un agencement des motifs 18, 20, 26 et 28 de sorte que pour un motif déterminé, les rangées de stries de chaque motif adjacent audit motif déterminé présentent une direction d'extension différente de celle des rangées de stries dudit motif déterminé.

De façon similaire au premier exemple de réalisation, les parties du flanc 14 non texturées présentent une luminosité supérieure d'au moins 5 unités, de préférence d'au moins 10 unités, aux différentes luminosité des motifs 18, 20, 26 et 28.

Dans la variante illustrée à la figure 3, le pas entre les stries 30, 32 des motifs 26, 28 est réduit par rapport au pas des stries 22, 24 des motifs 18, 20. Alternativement, il est possible de prévoir un pas identique pour les stries 22, 24. Ainsi, il est possible de prévoir que la texture 16 soit composée par répétition d'un motif de base dont seule l'orientation des rangées de stries varie, et non le pas.

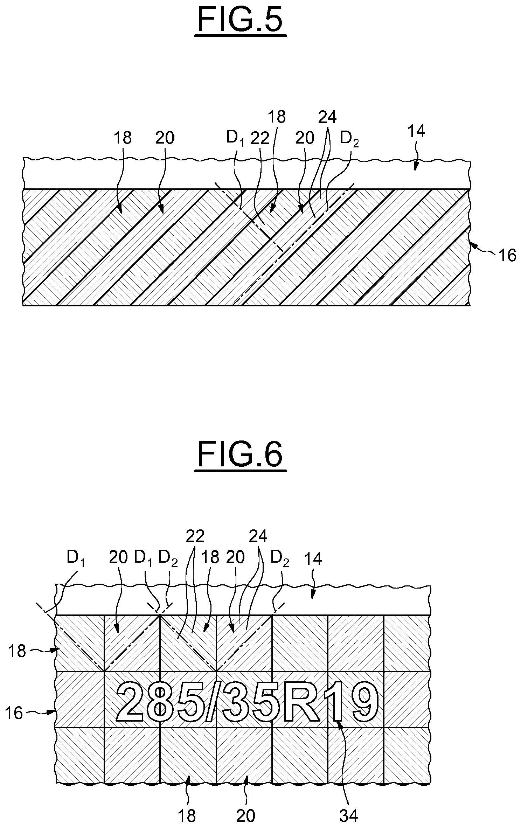

L'exemple de réalisation illustré à la figure 4, sur laquelle les éléments identiques portent les mêmes références, diffère des premiers exemples illustrés par la forme extérieure des motifs 18, 20 de la texture 16 qui est ici hexagonale. En variante, il est possible de prévoir d'autres formes, par exemple rectangulaire ou de parallélogramme comme illustré à la figure 5.

Selon diverses variantes de réalisation, il est également possible d'intégrer des marquages dans la texture 16 du flanc du pneumatique. Par exemple, dans l'exemple de réalisation illustré à la figure 6, sur laquelle les éléments identiques portent les mêmes références, le flanc du pneumatique comprend un marquage 34 dans la zone de la texture 16. Le marquage 34 peut se présenter sous la forme d'une surface lisse. Le marquage 34 comprend ici des informations techniques du pneumatique. Il est possible de prévoir tout autre type de marquage, par exemple des informations légales ou distinctives de la marque du pneumatique ou encore des codes à barres pour identification de stock, un numéro de série individuel dudit pneumatique, etc.

Le marquage 34 a de préférence une luminosité supérieure à celle des motifs 18 et 20, qui peut par exemple être comprise entre 20 et 30. Cet écart de luminosité permet de rendre le marquage 34 bien visible. Le marquage 34 est préférentiellement encastré dans la texture 16, ou affleure avec celle-ci.

Dans les exemples de réalisation illustrés, pour chaque motif de la texture 16 du flanc du pneumatique, les stries sont agencées sous forme de rangées et s'étendent linéairement de façon continue selon la direction d'extension de ces rangées. En variante, il est possible de prévoir que tout ou partie des rangées sont formées chacune par une succession de stries s'étendant selon la direction d'extension et espacées les unes par rapport aux autres de façon régulière ou irrégulière.

L'invention a été illustrée sur la base d'une texture s'étendant sur tout ou partie du flanc et divisée en plusieurs motifs qui comprennent des éléments de texture réalisés sous forme de stries. On ne sort pas du cadre de la présente invention lorsque les éléments de texture des motifs comprennent d'autres types d'éléments de texture en creux par exemple des cavités, qui peuvent présenter une forme circulaire, cylindrique, polygonale, etc., et qui sont agencées sous formes de rangées parallèles s'étendant selon la même direction d'extension pour un motif considéré.

Selon d'autres modes de réalisation, il est encore possible de prévoir des motifs comprenant des éléments de texture en saillie à partir du flanc du pneumatique, par exemples des lames, des brins, des protubérances de section parallélépipédique, polygonale, etc. Dans ce cas, la hauteur moyenne de ces éléments en saillie peut être comprise entre 0.1 mm et 0.6 mm.

Avec la texture proposée dans l'invention, les déformations locales du flanc dues à la conformation du pneumatique sont masquées de manière particulièrement efficace. En outre, l'agencement des éléments de texture des motifs combiné à l'orientation particulière des motifs les uns par rapport aux autres permet d'obtenir au sein même de la texture des motifs présentant des luminosités différentes. Le contraste obtenu au sein de la texture produit un effet visuel notable sur la finition du pneumatique.

Par ailleurs, la prévision d'un écart d'au moins 5 unités entre la luminosité des parties non texturées du flanc et la luminosité de chaque motif de la texture permet de créer un effet de contraste qui rend davantage visible la texture.

## Revendications

1. Pneumatique en matériau caoutchoutique comprenant une bande de roulement (12) et deux flancs (14) délimitant ladite bande de roulement, au moins un des flancs comprenant au moins une texture (16) faisant contraste par rapport au reste dudit flanc, dans lequel ladite texture est divisée en une pluralité de motifs (18, 20) adjacents et de forme extérieure identique, tout ou partie des motifs comprenant une pluralité d'éléments de texture (22, 24) agencés de sorte à former dans le motif une pluralité de rangées s'étendant selon une même direction d'extension, et dans lequel pour un motif (18) déterminé de ladite texture, les rangées d'éléments de texture de chaque motif (20) adjacent audit motif déterminé présentent une direction d'extension différente de la direction d'extension des rangées des éléments de texture dudit motif déterminé, **caractérisé en ce que** des première et deuxième luminosités (L^{∗}1, L^{∗}2) des motifs (18, 20) adjacents de ladite texture sont comprises entre 5 et 15, et la valeur absolue des différences desdites première et deuxième luminosités (L^{∗}1, L^{∗}2) est inférieure ou égale à 3, la luminosité (L^{∗}3) dudit reste dudit flanc non texturé étant supérieure d'au moins 5 unités aux luminosités (L^{∗}1, L^{∗}2) des motifs (18, 20), les luminosités étant exprimées selon le modèle colorimétrique L*a*b* CIE 1976.

2. Pneumatique selon la revendication 1, dans lequel tout ou partie des éléments de texture (22, 24) de chaque motif s'étendent linéairement dans ledit motif selon la direction d'extension des rangées dudit motif.

3. Pneumatique selon la revendication 1 ou 2, dans lequel tout ou partie des éléments de texture (22, 24) de chaque motif sont la répétition d'un même élément de base.

4. Pneumatique selon l'une quelconque des revendications précédentes, dans lequel les motifs de ladite texture (18, 20) sont identiques entre eux.

5. Pneumatique selon l'une quelconque des revendications précédentes, dans lequel la valeur de l'angle formé entre la direction d'extension des rangées d'éléments de texture (22, 24) dudit motif déterminé et entre la direction d'extension des rangées d'éléments de texture de chaque motif adjacent audit motif déterminé est supérieure ou égale à 45° en valeur absolue.

6. Pneumatique selon la revendication 5, dans lequel la valeur dudit angle est supérieure à 60° en valeur absolue, et de préférence égale à 90° en valeur absolue.

7. Pneumatique selon la revendication 5 ou 6, dans lequel la valeur dudit angle est inférieure ou égale à 135° en valeur absolue.

8. Pneumatique selon l'une quelconque des revendications précédentes, dans lequel les motifs (18, 20) de ladite texture ont une forme extérieure polygonale, notamment carrée et/ou rectangulaire et/ou hexagonale et/ou de parallélogramme.

9. Pneumatique selon l'une quelconque des revendications précédentes, dans lequel la surface de tout ou partie des motifs (18, 20) de ladite texture est comprise entre 5 mm² et 3 cm², et de préférence comprise entre 10 mm² et 50 mm².

10. Pneumatique selon l'une quelconque des revendications précédentes, dans lequel tout ou partie des éléments de texture des motifs sont en creux par rapport audit flanc.

11. Pneumatique selon l'une quelconque des revendications précédentes, dans lequel tout ou partie des éléments de texture (22, 24) des motifs sont en saillie par rapport audit flanc.

12. Pneumatique selon l'une quelconque des revendications précédentes, dans lequel les éléments de texture des motifs ont des dimensions identiques.

13. Pneumatique selon l'une quelconque des revendications précédentes, dans lequel les éléments de texture des motifs de ladite texture ont une largeur moyenne comprise entre 0,02 mm et 0,35 mm, le pas entre lesdits éléments de texture d'un même motif étant compris entre 0.05 mm et 0.5 mm.

14. Pneumatique selon l'une quelconque des revendications précédentes, dans lequel ladite texture forme globalement une surface annulaire sur ledit flanc du pneumatique.

15. Pneumatique selon l'une quelconque des revendications précédentes, comprenant au moins un marquage (34) qui est entouré tout ou partie par la texture (16).

## Patentansprüche

1. Luftreifen aus Kautschukmaterial, der einen Laufstreifen (12) und zwei den Laufstreifen begrenzende Flanken (14) enthält, wobei mindestens eine der Flanken mindestens eine Textur (16) enthält, die einen Kontrast bezüglich des Rests der Flanke bildet, wobei die Textur in eine Vielzahl von Mustern (18, 20) aufgeteilt ist, die benachbart und von gleicher Außenform sind, wobei alle oder ein Teil der Muster eine Vielzahl von Texturelementen (22, 24) enthalten, die so angeordnet sind, dass sie im Muster eine Vielzahl von Reihen bilden, die sich gemäß einer gleichen Ausdehnungsrichtung erstrecken, und wobei für ein bestimmtes Muster (18) der Textur die Reihen von Texturelementen jedes Musters (20), das dem bestimmten Muster benachbart ist, eine andere Ausdehnungsrichtung als die Ausdehnungsrichtung der Reihen von Texturelementen des bestimmten Musters aufweisen, **dadurch gekennzeichnet, dass** erste und zweite Helligkeiten (L*1, L*2) der benachbarten Muster (18, 20) der Textur zwischen 5 und 15 liegen, und der Absolutwert der Unterschiede der ersten und zweiten Helligkeiten (L*1, L*2) geringer als oder gleich 3 ist, wobei die Helligkeit (L*3) des nicht texturierten Rests der Flanke um mindestens 5 Einheiten höher als die Helligkeiten (L*1, L*2) der Muster (18, 20) ist, wobei die Helligkeiten gemäß dem Farbmodell L*a*b* CIE 1976 ausgedrückt werden.

2. Luftreifen nach Anspruch 1, wobei alle oder ein Teil der Texturelemente (22, 24) jedes Musters sich im Muster gemäß der Ausdehnungsrichtung der Reihen des Musters linear erstrecken.

3. Luftreifen nach Anspruch 1 oder 2, wobei alle oder ein Teil der Texturelemente (22, 24) jedes Musters die Wiederholung eines gleichen Basiselements sind.

4. Luftreifen nach einem der vorhergehenden Ansprüche, wobei die Muster der Textur (18, 20) untereinander gleich sind.

5. Luftreifen nach einem der vorhergehenden Ansprüche, wobei der Wert des Winkels, der zwischen der Ausdehnungsrichtung der Reihen von Texturelementen (22, 24) des bestimmten Musters und zwischen der Ausdehnungsrichtung der Reihen von Texturelementen jedes dem bestimmten Muster benachbarten Musters größer als oder gleich 45° im Absolutwert ist.

6. Luftreifen nach Anspruch 5, wobei der Wert des Winkels größer als 60° im Absolutwert und vorzugsweise gleich 90° im Absolutwert ist.

7. Luftreifen nach Anspruch 5 oder 6, wobei der Wert des Winkels kleiner als oder gleich 135° im Absolutwert ist.

8. Luftreifen nach einem der vorhergehenden Ansprüche, wobei die Muster (18, 20) der Textur eine polygonale Außenform haben, insbesondere quadratisch und/oder rechtwinklig und/oder sechseckig und/oder die Form eines Parallelogramms.

9. Luftreifen nach einem der vorhergehenden Ansprüche, wobei die Fläche aller oder eines Teils der Muster (18, 20) der Textur zwischen 5 mm² und 3 cm², und vorzugsweise zwischen 10 mm² und 50 mm² liegt.

10. Luftreifen nach einem der vorhergehenden Ansprüche, wobei alle oder ein Teil der Texturelemente der Muster bezüglich der Flanke vertieft sind.

11. Luftreifen nach einem der vorhergehenden Ansprüche, wobei alle oder ein Teil der Texturelemente (22, 24) der Muster bezüglich der Flanke vorstehen.

12. Luftreifen nach einem der vorhergehenden Ansprüche, wobei die Texturelemente der Muster gleiche Abmessungen haben.

13. Luftreifen nach einem der vorhergehenden Ansprüche, wobei die Texturelemente der Muster der Textur eine mittlere Breite zwischen 0,02 mm und 0,35 mm haben, wobei der Zwischenraum zwischen den Texturelementen eines gleichen Musters zwischen 0,05 mm und 0,5 mm liegt.

14. Luftreifen nach einem der vorhergehenden Ansprüche, wobei die Textur global eine Ringfläche auf der Flanke des Luftreifens bildet.

15. Luftreifen nach einem der vorhergehenden Ansprüche, der mindestens eine Markierung (34) enthält, die ganz oder teilweise von der Textur (16) umgeben ist.

## Claims

1. Tyre made of rubbery material, comprising a tread (12) and two sidewalls (14) delimiting said tread, at least one of the sidewalls comprising at least one texture (16) that contrasts with the rest of said sidewall, wherein said texture is divided into a plurality of adjacent patterns (18, 20) of identical external shape, all or some of the patterns comprising a plurality of texture elements (22, 24) arranged so as to form in the pattern a plurality of rows that extend in one and the same direction of extension, and wherein, for a given pattern (18) of said texture, the rows of texture elements in each pattern (20) adjacent to said given pattern have a direction of extension different from the direction of extension of the rows of texture elements of said given pattern, **characterized in that** first and second lightness (L^{∗}1, L^{∗}2) of the adjacent patterns (18, 20) of said texture are comprised between 5 and 15, and the absolute value of differences of said first and second lightness is less than or equal to 3, the lightness (L^{∗}3) of said rest of said sidewall, which is not textured, being at least 5 units greater than the lightness (L^{∗}1, L^{∗}2) of the patterns (18, 20), lightness being expressed according to the L*a*b* colour model established by the CIE 1976.

2. Tyre according to Claim 1, wherein all or some of the texture elements (22, 24) of each pattern extend linearly in said pattern in the direction of extension of the rows of said pattern.

3. Tyre according to Claim 1 or 2, wherein all or some of the texture elements (22, 24) of each pattern are the repetition of one and the same base element.

4. Tyre according to any one of the preceding claims, wherein the patterns of said texture (18, 20) are mutually identical.

5. Tyre according to any one of the preceding claims, wherein the value of the angle formed between the direction of extension of the rows of texture elements (22, 24) of said given pattern and between the direction of extension of the rows of texture elements of each pattern adjacent to said given pattern is greater than or equal to 45° in terms of absolute value.

6. Tyre according to Claim 5, wherein the value of said angle is greater than 60° in terms of absolute value, and preferably equal to 90° in terms of absolute value.

7. Tyre according to Claim 5 or 6, wherein the value of said angle is less than or equal to 135° in terms of absolute value.

8. Tyre according to any one of the preceding claims, wherein the patterns (18, 20) of said texture have a polygonal, notably square and/or rectangular and/or hexagonal and/or parallelogram-shaped, external shape.

9. Tyre according to any one of the preceding claims, wherein the area of all or some of the patterns (18, 20) of said texture is between 5 mm² and 3 cm², and preferably between 10 mm² and 50 mm².

10. Tyre according to any one of the preceding claims, wherein all or some of the texture elements of the patterns are recessed into said sidewall.

11. Tyre according to any one of the preceding claims, wherein all or some of the texture elements (22, 24) of the patterns protrude from said sidewall.

12. Tyre according to any one of the preceding claims, wherein the texture elements of the patterns have identical dimensions.

13. Tyre according to any one of the preceding claims, wherein the texture elements of the patterns of said texture have a mean width of between 0.02 mm and 0.35 mm, the spacing between said texture elements of one and the same pattern being between 0.05 mm and 0.5 mm.

14. Tyre according to any one of the preceding claims, wherein said texture forms overall an annular surface on said sidewall of the tyre.

15. Tyre according to any one of the preceding claims, comprising at least one marking (34) that is entirely or partially surrounded by the texture (16).
